# EUROPEAN PATENT SPECIFICATION

(11) **EP 4 480 679 B1**
(45) Date of publication and mention of the grant of the patent: **19.11.2025**
(21) Application number: 23220358.8
(22) Date of filing: 27.12.2023
(51) Int. Cl.: B29C 65/02, B29C 65/04, B29C 65/10, B29C 65/14, B29C 65/18

(54) **SHEET WELDING MACHINE**
VORRICHTUNG ZUM VERSCHWEISSEN VON FOLIEN
MACHINE DE SOUDAGE DE FEUILLES

(30) Priority: 23.06.2023 ES 202331116 U
(43) Date of publication of application: 25.12.2024
(73) Proprietor: MATICMACHINES S.L., 08403 Granollers (Barcelona) (ES)
(72) Inventor: Carbonell Puig, Jordi, 08403 GRANOLLERS (BARCELONA) (ES)
(74) Representative: Herrero & Asociados, S.L.

(56) References cited:
- EP-A1- 2 985 111
- DE-U1- 29 518 196
- GB-A- 2 457 093

## Description

### Background to the invention

Different techniques for overlapping sheets by welding, e.g. made of thermoplastic material, are well known. The known techniques can be classified into two main groups: dielectric heated welding (also called high-frequency heated welding) and thermally heated welding.

Overlap by welding with dielectric heating is based on the application of a high-frequency alternating electrical voltage (of the order of 10 MHz) between two plates (electrodes) and between which the sheets to be welded are placed. This electrical voltage causes the sheets to vibrate at the molecular level and consequently raises the temperature of the sheets until the melting temperature is reached in the material in the contact zone. Then, usually by applying additional compression between the sheets and after cooling the sheets, the overlap by welding is produced.

In the overlap by welding with thermal heating, on the other hand, said heating is carried out by means of heat transfer by thermal conduction (e.g. by contact with a hot surface or by blowing hot air) or thermal radiation (e.g. by infrared). For this purpose, one of the outer surfaces of the sheets to be welded, or both outer surfaces at the same time, are heated by heat transfer from a heat source. The heat transfer is carried out for the time necessary to reach the melting temperature in the material of the contact surfaces of the sheets. Then, usually by applying additional compression between the sheets and similarly to the previous technique, after cooling the sheets, the overlapping by welding takes place.

Currently known welding machines of sheets with thermal heating comprise a welding module, which performs the welding with dielectric heating or thermal heating, a rear boundary, and a frontal boundary.

The welding module comprises an upper welder and a lower welder, the lower welder being usually fixed.

The upper welder is the one that defines the width of the weld, so in order to vary the width of the weld it is necessary to change the upper welders and replace them with welders of a different width, as the position of the upper welder has to coincide with the position of the lower welder.

In addition to the desired surface, there must be pressure over the entire surface to obtain a homogeneous weld and therefore, to change from a first welding width to a second welding width, two sets of welders are required, one with the first width and one with the second width.

This change of welder presents different drawbacks, such as the need to stop the machine and manually change the welder, which implies a significant loss of time, with the consequent economic damage due to the decrease in performance.

In addition, it also requires that several welders with different widths have to be available, which also entails an economic disadvantage.

EP2985111A1 discloses a technique wherein a compact pressing body with a pressing surface smaller in the area than a welding range can weld together sheet-like members over the whole area of the welding range by pressing the sheet-like members being reliably moved in a direction substantially orthogonal to a pressing direction of the pressing body. In a state where sheet-like members are pressured by a pressing surface pressing the sheet-like members in a pressing direction, the sheet-like members are repeatedly pressured by a horn during a predetermined pressuring time in one cycle of a preset low-frequency vibration period by maintaining the horn in low-frequency vibration with the low-frequency vibration period. Therefore, the sheet-like members being reliably moved in the direction substantially orthogonal to the pressing direction can be welded together over the whole area of the welding range by pressing with the compact horn including the pressing surface smaller in the area than the welding range.

### Description of the invention

Therefore, an objective of the present invention is to provide a sheet welding machine in which welds of different widths are achieved without needing to change the upper welder and/or the lower welder.

With the welding machine of the invention, the aforementioned disadvantages are solved, presenting other advantages that will be described below.

The sheet welding machine according to the present invention is defined in claim 1. The dependent claims include optional features.

In particular, the sheet welding machine comprises:
- a table on which a first and second sheets are placed,
- a welding module including an upper welder and a lower welder, which weld the first and second sheets together,
wherein at least one of the upper welder and the lower welder is movable between:
- a maximum welding width position; and
- at least one minimum welding width position.

Furthermore, preferably, the at least one of the upper welder and the lower welder is also movable between any intermediate position between the maximum welding width position and the at least one minimum welding width position.

According to a preferred embodiment, the upper welder is movable and the lower welder is fixed.

In particular, the upper welder is preferably horizontally movable with respect to the table.

In the maximum welding width position, the position of the upper welder coincides with the position of the lower welder, and in the minimum welding width position the upper welder is offset from the lower welder.

Preferably, the upper welder is located on a carriage which is mounted on a slide guide.

### Brief description of the drawings

For a better understanding of what has been explained above, drawings are included in which, schematically and only as a non-limiting example, a practical case of embodiment is represented.
Figure 1 is an elevation view of the welding machine according to the present invention; and
Figures 2 to 4 are schematic elevation views showing three possible positions of the welders, achieving welds with three different widths.

### Description of a preferred embodiment

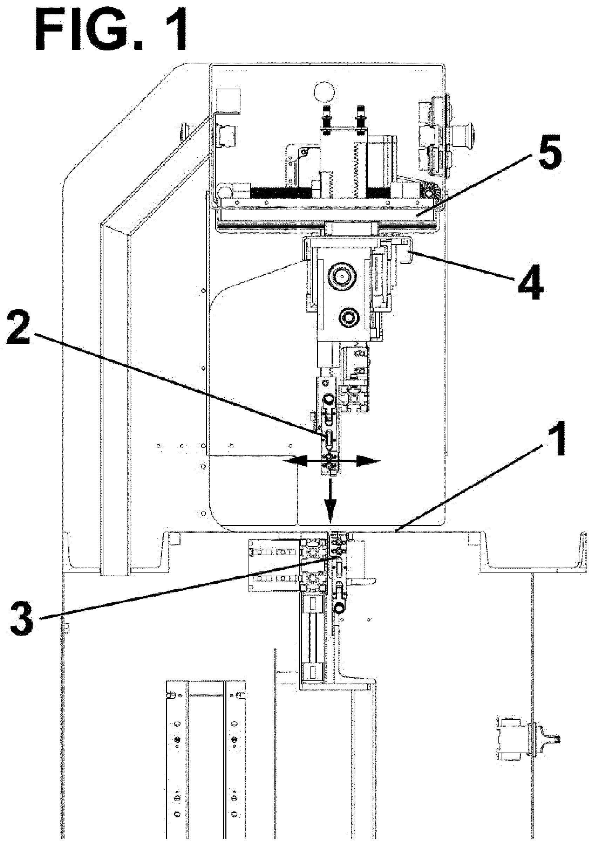

As shown in figure 1, the sheet welding machine according to the present invention comprises a table (1) on which a first and second sheets (not shown in the figures) are placed and welded together.

The welding machine of the present invention also comprises a welding module consisting of an upper welder (2) and a lower welder (3).

The upper welder (2) is vertically and horizontally movable with respect to the table (1), and the lower welder (3) is preferably fixed to the table (1).

To enable this vertical and horizontal movement, the upper welder (2) is located on a carriage (4) which is mounted on a sliding guide (5).

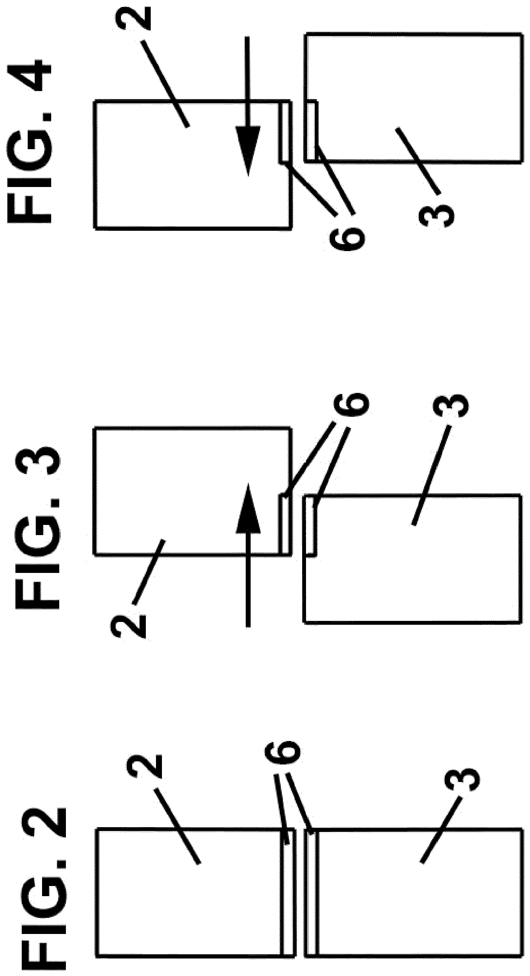

The upper welder (2) can be placed in different positions with respect to the lower welder (3), achieving different welding widths, as shown in figures 2 to 4.

In these figures, the welding surface is indicated by reference number 6.

In particular, Figure 2 shows a welding surface (6) with its maximum width, in which case the upper welder (2) is positioned exactly above the lower welder (3), their positions coinciding.

In figure 3, the upper welder (2) has been moved to the right over the lower welder (3), so that the welding surface (6) is smaller.

In figure 4, the upper welder (2) has been shifted to the left over the lower welder (3), so that the welding surface (6) is smaller.

It should be noted that the upper welder (2) can be placed in any position between a position of maximum width of the welding surface (6), which corresponds to the position in figure 2, and two positions of minimum width of the welding surface (6), respectively to the left and to the right.

Although reference has been made to a specific embodiment of the invention, it is obvious to a person skilled in the art that the machine described is susceptible to numerous variations and modifications, and that all the details mentioned can be replaced by technically equivalent ones, without departing from the scope of protection defined by the appended claims.

## Claims

1. Sheet welding machine, comprising:
- a table (1) on which a first and second sheets are placed,
- a welding module comprising an upper welder (2) and a lower welder (3), which weld the first and second sheets together,
**characterized in that** at least one of the upper welder (2) and the lower welder (3) is movable between:
- a maximum welding width position; and
- at least one minimum welding width position.

2. Sheet welding machine according to claim 1, wherein the at least one of the upper welder (2) and the lower welder (3) is also movable between any intermediate position between the maximum welding width position and the at least one minimum welding width position.

3. Sheet welding machine according to claim 1 or 2, wherein the upper welder (2) is movable and the lower welder (3) is fixed.

4. Sheet welding machine according to any one of the preceding claims, wherein the upper welder (2) is horizontally movable with respect to the table (1).

5. Sheet welding machine according to any one of the preceding claims, wherein, at the maximum welding width position, the position of the upper welding tool (2) coincides with the position of the lower welding tool (3).

6. Sheet welding machine according to any one of the preceding claims, wherein, in the minimum welding width position the upper welder (2) is offset from the lower welder (3).

7. Sheet welding machine according to any one of the preceding claims, wherein the upper welder (2) is located on a carriage (4) which is mounted on a sliding guide (5).

## Patentansprüche

1. Blattschweißmaschine mit:
- einem Tisch (1), auf dem ein erstes und ein zweites Blatt angeordnet sind,
- einem Schweißmodul, das eine obere Schweißeinrichtung (2) und eine untere Schweißeinrichtung (3) aufweist, die das erste und zweite Blatt zusammenschweißen,
**dadurch gekennzeichnet, dass**
zumindest eine Schweißeinrichtung aus der oberen Schweißeinrichtung (2) und der unteren Schweißeinrichtung (3) bewegbar ist zwischen:
- einer maximalen Schweißbreitenposition; und
- zumindest einer minimalen Schweißbreitenposition.

2. Blattschweißmaschine gemäß Anspruch 1, wobei die zumindest eine Schweißeinrichtung aus der oberen Schweißeinrichtung (2) und der unteren Schweißeinrichtung (3) außerdem bewegbar ist zwischen einer beliebigen Zwischenposition zwischen der maximalen Schweißbreitenposition und der zumindest einen minimalen Schweißbreitenposition.

3. Blattschweißmaschine gemäß Anspruch 1 oder 2, wobei die obere Schweißeinrichtung (2) bewegbar ist und die untere Schweißeinrichtung (3) fixiert ist.

4. Blattschweißmaschine gemäß einem der vorherigen Ansprüche, wobei die obere Schweißeinrichtung (2) in Bezug auf den Tisch (1) horizontal bewegbar ist.

5. Blattschweißmaschine gemäß einem der vorherigen Ansprüche, wobei an der maximalen Schweißbreitenposition die Position des oberen Schweißwerkzeuges (2) mit der Position des unteren Schweißwerkzeuges (2) übereinstimmt.

6. Blattschweißmaschine gemäß einem der vorherigen Ansprüche, wobei in der minimalen Schweißbreitenposition die obere Schweißeinrichtung (2) von der unteren Schweißeinrichtung (3) versetzt ist.

7. Blattschweißmaschine gemäß einem der vorherigen Ansprüche, wobei die obere Schweißeinrichtung (2) auf einem Schlitten (4) angeordnet ist, der auf einer Gleitführung (5) montiert ist.

## Revendications

1. Machine à souder des feuilles, comprenant :
- une table (1) sur laquelle sont placées une première et une deuxième feuille,
- un module de soudage comprenant une soudeuse supérieure (2) et une soudeuse inférieure (3), qui soudent les première et deuxième feuilles ensemble,
**caractérisée en ce qu'**au moins l'une des soudeuses supérieure (2) et inférieure (3) est mobile entre :
- une position de largeur de soudage maximale ; et
- au moins une position de largeur de soudage minimale.

2. Machine à souder des feuilles selon la revendication 1, dans laquelle l'au moins une des soudeuses supérieure (2) et inférieure (3) est également mobile entre toute position intermédiaire entre la position de largeur de soudage maximale et l'au moins une position de largeur de soudage minimale.

3. Machine à souder des feuilles selon la revendication 1 ou 2, dans laquelle la soudeuse supérieure (2) est mobile et la soudeuse inférieure (3) est fixe.

4. Machine à souder des feuilles selon l'une quelconque des revendications précédentes, dans laquelle la soudeuse supérieure (2) est mobile horizontalement par rapport à la table (1).

5. Machine à souder des feuilles selon l'une quelconque des revendications précédentes, dans laquelle, à la position de largeur de soudage maximale, la position de l'outil de soudage supérieur (2) coïncide avec la position de l'outil de soudage inférieur (3).

6. Machine à souder des feuilles selon l'une quelconque des revendications précédentes, dans laquelle, en position de largeur de soudage minimale, la soudeuse supérieure (2) est décalée par rapport à la soudeuse inférieure (3).

7. Machine à souder des feuilles selon l'une quelconque des revendications précédentes, dans laquelle la soudeuse supérieure (2) est située sur un chariot (4) monté sur un guide coulissant (5).
